# EUROPEAN PATENT APPLICATION

(11) **EP 3 424 384 A1**
(43) Date of publication of application: **09.01.2019**
(21) Application number: 17179638.6
(22) Date of filing: 04.07.2017
(51) Int. Cl.: A47K 7/02, B32B 38/14

(54) **DECORATED CLEANING PADS**

(71) Applicant: 3M Innovative Properties Company, Saint Paul, MN 55133-3427 (US)
(72) Inventor: Lacka, Anna, 05-825 Grodzisk Mazowiecki (PL); Kolasa, Sebastian, 05-870 Blonie (PL)
(74) Representative: Kurz, Arnd

(57) **Abstract**

Method of making a multi-layer cleaning pad for cleaning the human body comprising
(i) providing a top layer having a substrate weight of from 30 to 600 g/m², preferably from 40 to 100 g/m², more preferably from 40 to 60 g/m² and comprising either a sheet of polyester non-woven or a polyurethane foam;
(ii) providing a polyurethane foam layer having a density of between 10 to 50, preferably between 20 to 30 g/cm³;
(iii) creating a printed pattern displaying information or decoration on the top surface of the top layer by screen printing;
(iv) optionally cutting the multi-layer article into pieces having length of from 10 to 20 cm and a width from 5 to 19 cm;
(v) optionally laminating another layer comprising at least a further polyurethane foam layer to the bottom surface of the foam layer of step (ii);
wherein the top layer of (i) and the foam layer of (ii) may be provided as a multi-layered article or as separate layers that are combined to form a multi-layered article after the printing step (iii). Also provided is a multi-layer cleaning pad obtainable by the method.

## Description

### Field

The present disclosure relates to cleaning pads, for example sponges for cleaning the body, so called body sponges, containing printed images or messages. The present disclosure also relates to a method for making printed sponges.

### Background

Body sponges are used to clean the human body typically when having a bath or taking a shower. They are mainly used when bathing babies or small children. The sponges contain at least one open cell polyurethane foam layer which absorbs water and allows water to be squeezed out again. To make the sponges more attractive to small children they can be decorated, for example to display images. There is a need for printed sponges, for example body sponges, that have a durable printing. Desirably, the printings are resistant to being washed off at warm water temperatures.

### Summary

In one aspect there is provided a multi-layer cleaning pad comprising
(i) providing a top layer comprising either a sheet of polyester non-woven or a polyurethane foam;
(ii) providing a polyurethane foam layer;
(iii) creating a printed pattern displaying information or decoration on the top surface of the top layer by screen printing;
(iv) optionally cutting the multi-layer article into pieces having a length of from 10 to 20 cm and a width of from 5 to 19 cm;
(v) optionally laminating another layer comprising at least a further polyurethane foam layer to the bottom surface of the foam layer of step (ii);
wherein the top layer of (i) and the foam layer of (ii) may be provided as a multi-layered article or as separate layers that are combined to form a multi-layered article after the printing step (iii).

In another aspect there is provided a cleaning pad obtainable by the method.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to encompass the items listed thereafter and equivalents thereof as well as additional items. The use of "a" or "an" is meant to encompass "one or more". Any numerical range recited herein is intended to include all values from the lower value to the upper value of that range. For example, a concentration range of from 1 % to 50 % is intended to be an abbreviation and to expressly disclose the values between the 1 % and 50 %, such as, for example, 2 %, 40 %, 10 %, 30 %, 1.5 %, 3.9 % and so forth.

Unless stated otherwise, weight percentages (also abbreviated herein as "wt %", "wt. %" or "% by weight") of ingredients of a composition are based on the weight of the composition, i. e. the weight of the composition is 100 %.

### Cleaning pads:

The cleaning pads provided herein may typically be used for cleaning the human body, for example when taking a bath or a shower. Preferably, the pads are used to clean babies or small children when they take a bath. Such cleaning pads are also referred to in the art as body sponges.
The pads have an absorbent core typically containing a polyurethane foam. The foam allows to absorb water that can be squeezed out again by squeezing the foam. The foam is generally flexible enough to be squeezed by hand, for example to release water from the sponge when having a bath. The cleaning pads are multi-layer articles and contain a top layer in addition to the foam layer. The top surface of the top layer is exposed and contains at least an area carrying a printing displaying information or decoration. The top layer is connected by its bottom surface to the top surface of the foam layer. The connection may be direct. The connection may also be indirect, which means between top layer and foam layer there may be one or more than one intermediate layers. The top layer is connected to the foam layer by lamination or by using one or more adhesives or a combination thereof. Adhesives as known in the art may be used, for example polyurethane adhesives.

Lamination may be carried out, for example, by heat sealing. In this process, the surface of a foam is heated to form a layer of tacky liquid after which the substrate is applied to the fused surface of the foam to form a laminate. When the layer cools and resolidifies, the resulting bond between the foam and the substrate is strong and may even be stronger than the strength of the original foam. Heat sealing, or heat lamination, is known in the art and described, for example, in US 2,957,793.

The cleaning pad may be a two-layer article consisting of a top layer and a foam layer, or a three-layer article, or a multi-layer article having more than three layers. For example, the cleaning pad may be a three-layer article comprising or consisting of a top layer, a first foam layer and a second foam layer.

The cleaning pads typically have a length of from 10 to 20 cm. The cleaning pads typically have a width of from 5 to 19 cm. The width of the pad is typically smaller than its length. The cleaning pads may have a thickness of from 1 to 9 cm. The thickness is typically smaller than the length and the width of the pad.

The top layer typically is a flexible material that is flexible enough to be squeezed by hand. The top layer of the cleaning pad comprises, preferably consists, of a sheet of a non-woven material or a foam layer. The non-woven material is a polyester. The foam layer in the top layer is or comprises a polyurethane foam. The top layer may have a thickness of from about 0.2 mm to 30 mm.

In one embodiment the top layer comprises, preferably consists of a non-woven material. The non-woven material comprises, preferably consists of a polyester. Polyesters are polymers containing repeating ester groups in their main chain. Typically, the polyester non-woven contains polyethylene terephthalate (PET). Preferably the non-woven material contains at least 50 %, preferably at least 75 % and more preferably at least 95 % by weight based on the non-woven of PET. The top layer may even contain 100 % by weight of PET.

The top layer comprising the non-woven material may have a thickness of from 0.2 to 30 mm, preferably from 0.2 to 5 mm. The non-woven material preferably is porous enough to absorb water and is flexible enough that the water can be squeezed out again, at least partially, when squeezing the non-woven material by hand.

The non-woven material may have a substrate weight of from 30 to 6,000 g/m², or from 40 to 500 g/m², preferably from 40 to 160 g/m².

Suitable top layers include one or more sheets of non-woven materials that may have a tensile strength of at least 120 N/5cm in machine direction (MD) (ISO 9073-2) and at least 130 N/5cm in cross-direction (CD).

Suitable materials include non-woven sheets having an elongation at break in MD of at least 40 % and an elongation at break in CD of at least 60 %. Maximum values may include up to 200 %. The non-woven sheet preferably has a low shrinkage, for example a shrinkage of not more than 9 % in MD and CD at 190 °C/3min.

The non-woven material typically has a smoother touch than the foam layer.

Suitable non-woven materials are commercially available, for example, as those under the trade designation "E50" from Novita S.A., Zielona Gora, Poland.

In another embodiment the top layer comprises or consists of a foam. The top layer foam preferably is a polyurethane foam. Suitable polyurethane foams include open cell or closed cell foams. Suitable polyurethane foams include polyester or polyol urethanes, i. e. polyurethanes obtained by the reaction of isocyanates, preferably diisocyanates with polyesters or polyols. Suitable foams for top layer foams may have a density between 20 to 40 kg/m³. Preferably, they have a higher density than the foam core layer to which they are connected. Typically the density is 10 to 50 % higher.
The foam layer forming the top layer may have a thickness of from about 1 mm to about 50 mm, preferably from 5 to 30 mm.

The top layer is combined with a polyurethane foam layer (core layer) to form a multi-layer article. Suitable polyurethane foams include open cell foams, typically polyester or polyol urethanes, i. e. polyurethanes obtained by the reaction of isocyanates, preferably diisocyanates with polyesters or polyols. Suitable foams may have a density between 10 to 50, preferably between 20 to 30 g/cm³. The foam layer is flexible such it can be squeezed by hand when dry and when soaked with water to at least partially squeeze out the water. The foam layer may have a thickness of from about 5 mm to about 85 mm depending on the thickness of the top layer and the desired overall thickness of the pad and depending whether the pad contains further foam layers, typically a bottom layer. Suitable materials include commercial polyurethane foams for producing cleaning sponges.

The top surface of the top layer displays information or decoration. Such patterns may include letters, pictures, geometrical patterns of dots, lines, triangles and the like. Preferably, the pattern is coloured and includes at least one of the colours yellow, red, green and blue and combinations thereof.

The pattern is applied to the top layer by screen printing. Screen printing can be carried out on commercial screen printers or with printers known in the art. The ink used to create the display of information or decoration on the top surface of the top layer preferably is a plastisol ink, preferably an ink that is essentially free of PVC (polyvinyl chloride). "Essentially free of PVC" as used herein means no PVC or amounts of less than 1 ppm or even less than 0.5 ppm. Plastisol inks are typically dispersions of polymer particles in a liquid plasticiser. Pigments or dyes are added and optionally fillers, stabilisers and thixotropic agents. Under ambient storage conditions the polymer particles do not dissolve in the plasticiser but upon subjecting to temperatures above 100 °C, the plastisol composition gels or cures and remains gelled, or cured, upon cooling. Preferred plastisol inks include inks containing acrylate resin particles. Preferred plastisol inks include acrylate particles and liquid organic phosphates as plasticizer. Examples of plastisol inks with acrylate particles are described for example in US2006/0100312, WO98/29507 and US4210567 incorporated herein by reference. Typically the cleaning pads are subjected to one or more heat treatment steps at temperatures from 150 °C to 170 °C to cure the inks after the inks have been applied to the substrate.
Typical printing conditions may include using a four colour screen printing technique. A 120T mesh may be used and each colour may be printed wet on the substrate and then heat cured. Curing times may include 1- 3 minutes at temperatures between 150 °C and 160 °C. Commercial inks may be used and the manufacturer's printing recommendations should be followed.
Printing may be carried out on the top layer which is then combined with the at least one foam layer to form the multi-layer article, or the printing can be carried out on the multi-layer article of top layer and foam layer. Subsequently further layers may be added to the bottom surface of the foam layer. It is also possible to subject a three-layer or other multi-layer articles to the printing.

Pads obtained with the printing process as described herein have been found to have a printing that is more stable upon treatment with warm water. The printing does not become washed off and keeps its brilliance compared to the same sponges but having a printing obtained by a different method as demonstrated by the washing tests in the example section.

### Washing test

The washing test for sponges measures the stability of the printing under exposure to water at warm temperatures.

Two-layered body sponges of oval shape when viewed from top (maximum length about 12 cm, maximum width about 9 cm and various thicknesses) were subjected to a washing test by submerging the sponges into a warm water bath (60 °C) containing soap for 60 minutes. The sponges contained a polyester top layer (100 % wt PET non-woven, surface weight about 50 g/m²) combined with a polyurethane foam layer (density about 23 kg/m³). After removing the sponges from the water bath, squeezing out the water and drying them at room temperature for 24 h, the sponges were visually inspected for the brightness of their printings. The brightness was compared with the brightness before the sponges were subjected to the washing test. The composition of the sponges is shown in table 1

**Table 1:**

| | Thickness of polyester top layer | Thickness of PU bottom layer | Connection of top and bottom layer | Printing method | Ink |
|---|---|---|---|---|---|
| Ex 1 (comparative) | 2 mm | 20 mm | PU adhesive | sublimation printing | sublimation ink |
| Ex 2 | 3 mm | 25 mm | heat sealing lamination | screen printing | PVC-free, plastisol ink |
| Ex 3 (comparative) | 5 mm | 30 mm | heat sealing lamination | sublimation printing | sublimation ink |
| Ex 4 | 2.5 mm | 30 mm | PU adhesive | screen printing | PVC-free, plastisol ink |

After the washing test the screen-printed samples essentially maintained their original brightness while the brightness of the other sponges had noticeably faded and deteriorated.

## Claims

1. Method of making a multi-layer cleaning pad comprising
(i) providing a top layer comprising either a sheet of polyester non-woven or a polyurethane foam;
(ii) providing a polyurethane foam layer;
(iii) creating a printed pattern displaying information or decoration on the top surface of the top layer by screen printing;
(iv) optionally cutting the multi-layer article into pieces having length of from 10 to 20 cm and a width from 5 to 19 cm;
(v) optionally laminating another layer comprising at least a further polyurethane foam layer to the bottom surface of the foam layer of step (ii);
wherein the top layer of (i) and the foam layer of (ii) may be provided as a multi-layered article or as separate layers that are combined to form a multi-layered article after the printing step (iii).

2. The method of claim 1 wherein the top layer has a substrate weight of from 30 to 600 g/m², preferably from 40 to 100 g/m², more preferably from 40 to 60 g/m².

3. The method of any one of claim 1 or 2 wherein the polyurethane foam layer has a density of between 10 to 50, preferably between 20 to 30 g/cm³.

4. The method of any one of the preceding claims wherein the top layer has a thickness of from 0.2 to 30 mm.

5. The method of any one of the preceding claims wherein the multi-layer article has a thickness from 10 to 90 mm.

6. The method of any one of the preceding claims wherein the screen printing involves using a plastisol ink that is essentially free of poly vinyl chloride.

7. The method of any one of the preceding claims wherein the plastisol ink comprises one or more acrylate resin particles.

8. The method of any one of the preceding claims wherein the top layer comprises a polyester non-woven comprising at least 50% by weight of polyethylene terephthalate.

9. The method of any one of the preceding claims wherein the top layer comprises polyurethane foam having a density of 15 to 70 kg/m³ with the proviso that the density is higher than the density of the foam of step (ii).

10. The method of any one of the preceding claims wherein the at least one foam layer comprises a polyurethane obtained by a reaction comprising the reaction of a diisocyanate with a polyester, a polyol or a combination thereof.

11. The method of any one of the preceding claims wherein the top surface of the top layer is smoother to the touch than at least one of the exposed surfaces of the foam layer of step (ii).

12. The method of any one of the preceding claims wherein the plastisol ink is subjected to curing or gelling at a temperature between 150 and 170 °C.

13. The method of any one of the preceding claims wherein the non-woven material before subjected to printing has an elongation at break of at least 40 % in machine direction or in cross direction.

14. The method of any one of the preceding claims wherein the cleaning pad is for cleaning the human body.

15. A multi-layer cleaning pad obtainable by the method according to any one of claims 1 to 14.

16. The multi-layer cleaning pad of claim 15 comprising a printed pattern on the top surface of its top layer displaying information or decoration and wherein the printed pattern comprises one or more acrylate resin.
